# EUROPEAN PATENT SPECIFICATION

(11) **EP 3 730 829 B1**
(45) Date of publication and mention of the grant of the patent: **07.06.2023**
(21) Application number: 20171604.0
(22) Date of filing: 27.04.2020
(51) Int. Cl.: F16L 55/46

(54) **AUTOMATIC CLEANING PIG LAUNCHER FOR WASTEWATER PIPELINES**
AUTOMATISCHER REINIGUNGSMOLCHWERFER FÜR ABWASSERROHRLEITUNGEN
LANCEUR DE RACLEUR DE NETTOYAGE AUTOMATIQUE POUR CONDUITES D'EAUX USÉES

(30) Priority: 26.04.2019 DK PA201900493
(43) Date of publication of application: 28.10.2020
(73) Proprietor: Svendborg Motorværksted Aps, 5771 Stenstrup (DK)
(72) Inventor: POULSEN, Kim, 5762 Vester Skerninge (DK); KIRKEBY, Aksel, 5771 Stenstrup (DK)
(74) Representative: Dragsted Partners A/S

(56) References cited:
- EP-A2- 0 828 132
- US-A- 2 623 226
- US-A- 3 265 083
- US-A- 5 277 248
- US-A- 6 079 074
- US-A1- 2016 377 217

## Description

### Technical field of the invention

The present invention relates to an automatic cleaning pig launcher for wastewater pipelines, comprising:
- a valve housing comprising flanges for installation in a wastewater pipeline, wherein the valve housing comprises at least one wastewater inlet and at least one wastewater outlet, and a feed opening for cleaning pigs, and
- a rotatable feed valve installed in the valve housing for receiving and feeding cleaning pigs into the pipeline, characterised in that the cleaning pig launcher further comprises:
- a cleaning pig magazine installed on the valve housing, adapted to storing and positioning a number of cleaning pigs so that the stored cleaning pigs can be successively launched into the wastewater pipeline via the feed valve without opening the magazine.

The present invention further relates to a cleaning system for automatic launch of cleaning pigs into wastewater pipelines, comprising an automatic cleaning pig launcher, wherein the system comprises a computer-based control system.

### Background of the invention

In Denmark alone, there are around 30,000 wastewater pumping stations with varying performances from 1-3 l/s to 1-2 m³/s. These wastewater pumping stations are connected by a network of wastewater pipes and are finally connected to a number of treatment plants or similar means for processing the wastewater. As increasing volumes of wastewater are collected and as pumping stations are continually shut down due to rationalisation measures, wastewater is generally pumped over increasing distances. These increasing distances result in the wastewater staying longer in closed pipes, and therefore deposits occur more and more frequently in the pipes (pressure lines), leading to an increase in the development of hydrogen sulphide in the pipes. The deposits on the inside of the pipes as well as the development of hydrogen sulphide may have major consequences for pipes, equipment and economy as well as for the staff servicing and maintaining wastewater systems. In the present document, various designations for wastewater pipelines will be used, such as "pressure lines", "pipelines", "wastewater lines" and "wastewater pipes", but the definition of all is pressurised pipelines for the transport of wastewater.

Increasing deposition or film formation will lead to a steadily smaller clear opening in the pipes, resulting in increased required pumping capacity and increased pumping costs. Typically, the regular maintenance of the pipes, in the form of cleaning them, receives reduced priority and only takes place in the event of clear signs of problems or an actual breakdown in a given wastewater line. It is known that savings can typically be obtained by frequent cleaning of the wastewater lines, but issues involving e.g. hydrogen sulphide render servicing a disproportionate cost. Hydrogen sulphide is formed when there is no more oxygen present in a wastewater pipeline. As wastewater lines become increasingly longer, there is thus an increasing risk of hydrogen sulphide formation at a volume which may at best be hazardous to health and at worst may cause death to staff servicing the pipes. Even in very small quantities, hydrogen sulphide can cause death, and at concentrations as small as 10 ppm, staff may only stay for 15 minutes in rooms with hydrogen sulphide. Already at concentrations of around 600 ppm, rapid collapse occurs with no subsequent possibility of self-rescue. At 1,000 ppm, immediate death occurs. Wastewater treatment plants in Europe, where deposits are collected along with sludge from wastewater pipelines, have measured hydrogen sulphide levels as high as 2,500 ppm. This risk of exposure to hydrogen sulphide means that there must always be two employees present during work involving opening or inspecting such wastewater lines. Hydrogen sulphide causes initial paralysis, preventing staff from shouting for help, which is why it is important to have visual contact and/or expensive and maintenance-heavy detection equipment available when maintaining pressure lines in wastewater systems. This fact of hydrogen sulphide formation is specific to wastewater lines and is not a problem in relation to e.g. supply lines for clean water, oil, district heating, etc., and is therefore a circumstance that must be addressed specifically for this technical field.

Hydrogen sulphide is not only a problem for the staff servicing the pressure lines; it is also very aggressive towards pipes and equipment. Hydrogen sulphide degrades concrete and metals, e.g. steel, copper and aluminium, and crumbles rubber and plastics. Therefore, cleaning elements are inserted, and pushed through the pipes, scraping the inside of the pipes clean. Often, a cleaning element, e.g. a cleaning sponge, is called a cleaning pig. A cleaning sponge or cleaning pig is typically a foam sponge made of foam rubber in various designs, but it may also be made of harder materials such as plastics, metals or combinations of them.

In large wastewater companies, millions of dollars are also spent on chemicals to counteract the formation of hydrogen sulphide.

US 3 265 083 discloses a pig handling valve for use in a gas pipe as a line cleaner to clean accumulated waxes or solids along the internal surfaces of a gas line. The valve comprises a valve body, a fluid inlet, a fluid outlet and a pig injector inlet as well as a rotatable plug.

The purpose of the present invention is thus to clean wastewater pipelines, e.g. pressure lines, without any health risk to staff.

It is a first aspect of the present invention to reduce the need for the use of chemicals in wastewater lines, e.g. pressure lines.

It is a second aspect of the present invention to provide a product which reduces the power consumption in pressurised wastewater pipelines, i.e. wastewater lines in which wastewater is pumped forward.

It is a third aspect of the present invention to reduce the need for the use of chemicals to reduce hydrogen sulphide formation.

### Description of the invention

The present invention relates to an automatic cleaning pig launcher for wastewater pipelines according to the technical features of claim 1.

In this way, it is achieved, in a simple manner, that cleaning pigs can be launched without the use of on-site staff. Therefore, there is also no risk of staff being exposed to harmful particles or substances. Furthermore, an improved operating economy is achieved as the cleaning pigs can be launched at small time intervals compared to the current intervals because there is no requirement for staff to be present at the time of launch. The launch can take place centrally as long as there are cleaning pigs in the magazine.

In an embodiment, the drain valve may be operated by compressed air. In this way, wastewater can be drained faster from both valve and valve housing as well as magazine.

In an embodiment, the feed valve may have a fully or partially circular cross-section as seen in parallel with the pivotal axis of the feed valve. In this way, a feed valve that is easily positioned in the valve housing is achieved in an easy manner.

In an embodiment, the outer periphery surface of the feed valve may be concave, and the inner wall of the valve housing may be convex.

In an embodiment, the sides of the valve housing may comprise a packing, e.g. an O-ring located between the valve housing side and the valve housing body. The O-ring may be located in a recess. In this way, a sealed valve housing is obtained in an installation-friendly way.

In an embodiment, the feed valve rotates approx. 90° from the position for receiving a cleaning pig to the position for launching a cleaning pig. The feed valve can turn towards a stop and may thus be positioned in the two extreme positions using this stop.

In an embodiment, at least 25% of the launch opening on the feed valve may comprise an insert adapted to interact with the mouth opening on the magazine. In this way, it is achieved that cleaning pigs that might become stuck when they are only fed halfway into the valve are cut in two and thereby do not block the valve in its movement. If the valve is blocked in anything other than open position, it will block the wastewater line. In a further embodiment, both ends of the through opening in the feed valve may comprise an insert. In this way, it is achieved that the feed valve can rotate in the same direction of rotation at all times, i.e. rotate 360° and still cut a cleaning pig in two, regardless of whether the feed valve is turned 180° around.

In an embodiment, the cleaning pig launcher may further comprise a positioning means for positioning a cleaning pig in the magazine, i.e. the magazine for additional cleaning pigs. This ensures stable and uniform feeding of cleaning pigs into the feed valve.

In an embodiment, the magazine may comprise a wastewater and hydrogen sulphide-tight cover. In this way, it can be ensured that there is no accidental release of either hydrogen sulphide or wastewater when the wastewater rises into the magazine. This ensures that no bacteria or other contamination will enter the environment surrounding cleaning pig launchers.

In an embodiment, the actuator comprises a sensor that measures the torque load on the actuator. In this way, it can be detected whether foreign bodies are stuck between the valve and the valve housing.

In an embodiment, the automatic cleaning pig launcher may comprise means for generating electricity, such as solar cells or fuel cells. This allows for a higher level of stand-alone operation, where cleaning pig launchers do not need any connection to the power grid. This may make the installation and operation of the cleaning pig launcher less expensive.

The present invention further relates to a cleaning system for automatic launch of cleaning pigs into wastewater pipelines, comprising an automatic cleaning pig launcher, wherein the system comprises a computer-based control system. In this way, the system can be autonomous and thus launch cleaning pigs at specific intervals or at specific measurements/loads recorded in the cleaning system. These can be measurements which, e.g., show greater counterpressure in the pipeline, which may be a result of incipient depositing. It may also be increased power consumption in the pumping station, or it may be the detection of increased hydrogen sulphide content in the pumping station or the subsequent pipeline. The computer-based control system may be part of or connected to a SCADA system. In an embodiment of the cleaning system, the computer-based control system of the cleaning system may comprise an interface module for communication with an SRO/SCADA system to control and operate the overall operation of an entire wastewater system. In this way, it is achieved that the cleaning system can communicate automatically with pumps and valves throughout the system. It is thus achieved that the system can be optimised for the given situation at the exact time when e.g. preventive cleaning is planned. In this way, it may be taken into account that a temporary shutdown is not appropriate. Similarly, a response can be made to a pump in a wastewater line starting to have an increased energy consumption, where a planned cleaning process may need to be accelerated.

In an embodiment, the interface module may be wireless. In this way, the need for wired connection is minimised.

In an embodiment of the invention, the cover of the magazine may comprise a sensor to indicate whether the cover has been removed. In this way, it can be detected whether the covers are inadvertently opened, and a warning may also be sounded.

In an embodiment, the inlet and outlet pipe and the magazine pipe may have a diameter of 30 mm to 700 mm, more preferably 40 mm to 500 mm, most preferably 50 mm to 300 mm. In a further embodiment, the pipes may have different diameters.

In an embodiment, the magazine may have an axial length of 0.5 m to 5 m, more preferably 1 m to 4 m, most preferably 1.5 m to 3 m. In this way, it is possible to have a number of cleaning pigs in the magazine so that replenishment from staff is done at time intervals that can fit into the normal operation of the plant.

In an embodiment, the cleaning pig launcher may comprise a further positioning means for positioning the cleaning pigs in the magazine. In this way, more exact positioning of the cleaning pigs is achieved. It is further achieved that several different types of cleaning pigs with different properties such as density, weight or hardness can be used in the same magazine.

In an embodiment, there may be room for more than one cleaning pig in the feed valve. This means that the volume of the feed valve, i.e. the passage through the valve, is sufficiently large for more than one cleaning pig. In this way, it is achieved that the cleaning pig launcher can reset itself if half a cleaning pig has been left at the bottom of the magazine. This means that there is room for e.g. 1.5 cleaning pigs in the feed valve. In this way, it is achieved that in the vast majority of cases where a cleaning pig has been cut in two, half a cleaning pig is launched only twice, the second time being with a complete cleaning pig.

In an embodiment, activation of the positioning means may take place using hydraulics, compressed air or electrical actuators. In this way, it is achieved that all the movable components in the cleaning pig launcher can be operated by the same power resource. By the use of compressed air, it is also achieved that the exhaust of wastewater in the feed valve can be amplified by the compressed air and thus not only be conditional on gravity.

In an embodiment, the valve housing comprises an injection hole for compressed air, arranged so that the injection against the drain valve takes place when the feed valve is in the receiving position. In this way, it can be ensured that the valve is completely drained of wastewater, even if there are impurities in the water.

In an embodiment, the feed valve can rotate 90° both clockwise and counterclockwise. In this way, the feed valve may be limited by a mechanical stop for positioning the feed valve. In a further embodiment, the feed valve can be rotated 180°. In this way, it is achieved that when the feed valve is turned, there is an even wear on both the valve and the insert, but that the actuator can still run the feed valve up towards a mechanical stop. When the valve can be turned, the frequency at which it needs to be replaced, e.g. if an insert has become too dull, can be reduced.

In an embodiment, the feed valve rotates from the receiving position to the feeding position by more than the diameter of the magazine. In this way, it is achieved that the rotation is large enough to move the cleaning pig to the launch position.

In an embodiment, the magazine feeds the cleaning pigs radially, i.e. at an angle of 90° into the wastewater pipeline. In this way, it is achieved that the feed valve, at the same time as receiving a cleaning pig, shuts off the addition of further wastewater into the feed valve. It is further achieved that an automatic cleaning pig launcher, which is located several metres underground, only needs a straight pipe without bends to the ground surface. In this way, it is easier to install the pipe, i.e. the magazine. Furthermore, when the system is in use, it is easier to load pigs into the magazine because gravity helps drag the pigs towards the feed valve.

In an embodiment, the magazine feeds the cleaning pigs at an angle of less than 90° into the valve housing and the feed valve. In this embodiment, the magazine may comprise means to impact the cleaning pigs with a force directed towards the feed valve, thereby pushing the cleaning pigs into the valve. In this way, it is achieved that the magazine can be longer without protruding above ground level.

In an embodiment, the diameter of the magazine may be smaller than the diameter of the opening in the valve and valve housing. In this way, an even higher assurance that the cleaning pig can still be fed into the feed valve is achieved, even if the centre of the opening in the feed valve is not completely concentric and/or parallel to the centre of the magazine.

In an embodiment, the cleaning pig launcher comprises a control module which comprises communication devices for both transmitting and receiving data. In this way, it is achieved that the cleaning pig launcher can be connected to the pump control in a wastewater system and thereby be optimised for the current situation in the system.

In one exemplary embodiment, the wastewater pipeline may be a pressurised wastewater pipeline. This means that the automatic cleaning pig launcher may operate in a pipeline where there is constant pressure inside the valve housing during the normal operations of the wastewater pipeline. The pressure may be in the form of fluid pressure, i.e. gas or liquid pressure which runs through the pipeline as well as the valve housing when it is in its open position. Furthermore, the cleaning pig may be launched into a fully operational pipeline, where the pig launcher closes off the flow through the pipeline for a short while, and the cleaning pig is inserted into the valve housing and/or rotatable feed valve; then the pipeline is opened again, causing the cleaning pig to be inserted into the pipeline during normal operations. Thus, it is not necessary to empty the pipeline and insert the cleaning pig, as may be necessary in gas, oil and other types of pipelines where the substance being fed through the pipeline is removed prior to cleaning. The cleaning pig may be fed through the pipeline using the normal flow of the pipeline, where the wastewater will force the cleaning pig along the inner volume of the pipeline in a downstream direction.

In one exemplary embodiment, the rotatable feed valve in a first position may be configured to provide fluid communication between an inlet pipe and an outlet pipe, and in a second position it may be configured to provide fluid communication with the magazine. Thus, in its first position, the rotatable feed valve will not affect the flow of the pipeline and will allow fluids to pass through the feed valve without any significant hinderance, permitting the pipeline to be operated in a normal fashion. In its second position, the rotary fluid valve will have moved from its first position into a position where the inner volume of the valve housing and/or the rotatable feed valve is in fluid communication with the inner volume of the magazine, allowing the cleaning pig to be moved from the inner volume of the magazine and into the inner volume of the valve. When the cleaning pig has been inserted into the valve, the valve may move from its second position into its first position, allowing the cleaning pig to utilise the fluid communication with the inlet pipe and/or the outlet pipe to travel along with the flow of the pipeline downstream.

In one exemplary embodiment, the second position of the rotatable feed valve may be configured to disconnect the fluid communication from the inlet pipe to the outlet pipe. This means that the rotatable feed valve of the cleaning pig launcher can close off the flow of pressurised wastewater from the inlet to the outlet. Thus, the valve, the valve housing and/or the launcher may prevent wastewater from passing through the launcher, allowing the cleaning pig to be inserted into the pipeline at a position that is downstream from where the flow of wastewater is blocked.

In an embodiment, the pump is closed during the loading of cleaning pigs into the feed valve.

In one exemplary embodiment, the automatic cleaning pig launcher may comprise a second valve positioned between the inlet pipe and/or the outlet pipe configured to prevent fluid communication from the inlet pipe and/or the outlet pipe into the rotatable feed valve. The second valve may be a close-off valve, which has the purpose of closing off the flow of wastewater from the inlet and into the inner volume of the rotatable valve. Thus, when the second valve is in its closed position, the rotatable valve may be manoeuvred into its second position in order to insert the cleaning pig into the valve and/or the valve housing. Subsequently, the rotatable valve may be manoeuvred into its first position, and the second valve may be opened, allowing the wastewater to flow into the valve housing and/or the rotatable feed valve, where the wastewater forces the cleaning pig in a downstream direction into the outlet pipe and onwards into the downstream part of the pipeline.

In one embodiment, the feed valve may comprise a position sensor. The position sensor collects the position of the feed valve. When the feed valve is in its first position, the position sensor may signal to the second valve to stay open. When the feed valve is in its second position, the position sensor collects a signal to close the second valve. When the cleaning pig is loaded into the feed valve, and the feed valve is rotated to the first position again, the position sensor signals to the second valve that it may open again.

It is to be understood that when having a second valve in both the inlet and the outlet pipe, there may in fact be two second valves. The term "second valve" is a term for a valve different from the feed valve.

The cleaning pig magazine is in fluid communication with the volume of the feed valve when the feed valve is in its second position. Hence, the term "installed on" may mean connected or attached to in a way that allows for cleaning pigs to be loaded/inserted into the feed valve.

In one embodiment, the actuator is activating the feed valve by a linear movement. In this way, it is possible to use an air cylinder or oil cylinder or similar linearly moving actuator.

In an embodiment, the magazine may comprise more than 3 cleaning pigs, more preferably more than 5 cleaning pigs.

In one exemplary embodiment, a longitudinal axis of the magazine may be positioned at an angle relative to a longitudinal axis of the pipeline. In one embodiment, the longitudinal axis of the magazine may be positioned at an angle that is orthogonal to the longitudinal axis of the pipeline. The longitudinal axis of the pipeline may extend in a direction that is parallel to and/or coaxial with the flow of wastewater. The longitudinal axis of the magazine may extend in a direction that intersects a plurality of the cleaning pigs that are stored in the magazine. The longitudinal axis may extend along the length of the magazine from its first end towards its second end, where the second end may be connected to the valve housing and/or the rotatable feed valve.

In one exemplary embodiment, the magazine may comprise a blocking device for selectively loading cleaning pigs into the rotatable feed valve. The blocking device may be a device that is capable of controlling the release of cleaning pigs from the magazine into the valve housing and/or the rotary feed valve. The blocking device may e.g. be configured to prevent one cleaning pig from manoeuvring towards the valve housing and/or the rotary valve, where the movement direction is in a direction coaxial to the longitudinal axis of the magazine. This may mean that if the blocking device prevents the first cleaning pig from entering, then the opening of the valve will not cause the cleaning pig to enter the valve. In an alternative, the blocking device may be configured to block the second cleaning pig, counting in a direction from the valve, which means that the first cleaning pig enters the valve when the valve opens up towards the magazine, while the second and all the remaining cleaning pigs are prevented from moving in a direction towards the valve due to the blocking of the second cleaning pig. In this embodiment, the cleaning pigs may be stacked in a direction that is coaxial with the longitudinal axis of the magazine and/or in a direction that is coaxial with a vertical axis. This may allow the force of gravity to assist in the insertion of the cleaning pig into the internal volume of the valve.

In one exemplary embodiment, the cleaning pig is inserted during the normal operations of the wastewater pipe. This means that the wastewater pipeline does not have to be taken out of normal service in order to send a cleaning pig to clean the side walls of the pipeline. The cleaning pig launcher may block off the flow past the cleaning pig launcher, insert the cleaning pig and subsequently open up the flow past the cleaning pig launcher.

In one embodiment, the rotational axis of the rotary feed valve may be at an angle to the longitudinal axis of the wastewater pipeline. In one example, the rotational axis of the rotary feed valve may be at a substantially right angle to the longitudinal axis of the wastewater pipeline and/or at a subtantially right angle to the longitudinal axis of the magazine.

In an embodiment, the cleaning pig launcher is located in a pump room or pump cellar. In this way, there is an easy connection option for emptying the feed valve and the magazine via the drain valve into a controlled pipe/environment.

In an embodiment, the cleaning pig launcher may comprise a sensor that detects whether there are cleaning pigs in the magazine. In this way, it is achieved that when the magazine is down to a specific number, the central is notified that it needs to be refilled.

In one embodiment, the valve may have an internal volume. The internal volume of the valve defines a volume which may be capable of holding a cleaning pig and/or may be configured as being part of the internal volume of the pipeline. The internal volume of the valve may be in direct fluid communication with the inlet pipe and/or the outlet pipe, allowing wastewater to pass into the internal volume from the inlet and/or allowing wastewater to pass into the outlet pipe from the internal volume of the valve. This communication may be when the valve is in its first position. When the valve is in its second position, the internal volume of the valve may be in fluid communication with the magazine, allowing liquids or solids to pass from the magazine into the internal volume, e.g. using gravity. Optionally, when the valve is in its second position the internal volume may be in fluid communication with a drain valve, where the drain valve may be utilised/used to drain liquids from the internal volume of the valve and thereby clear the internal volume for the insertion of the cleaning pig. The drain valve may be positioned below the rotational axis of the valve, or may optionally be positioned in a lower/bottom part of the valve housing, allowing gravity to force the liquids inside the internal volume and through the valve. As an alternative or addition to the gravity force, the drain valve may be equipped with a sucking function, allowing a vacuum force to drain the valve at a quicker rate than if it is only drained via gravity force.

### Brief description of the drawings

Fig. 1A shows a cleaning pig launcher according to the invention inserted into a wastewater system,
Fig. 1B shows a cleaning pig launcher as in Fig. 1 in top view without connected pipes,
Fig. 2A shows the valve housing and feed valve for the cleaning pig launcher,
Fig. 2B shows, in section, the valve housing and feed valve depicted in Fig. 2A,
Figs. 2C and 2D show the feed valve alone,
Figs. 3A-3C show, in principle sketches, feeding and positioning of a cleaning pig in the feed valve, and
Fig. 3D shows a principle sketch of a cleaning pig which is cut in two during rotation of the feed valve.

### Detailed description of the invention

With reference to the accompanying drawings, the present invention will be described in more detail in the following.

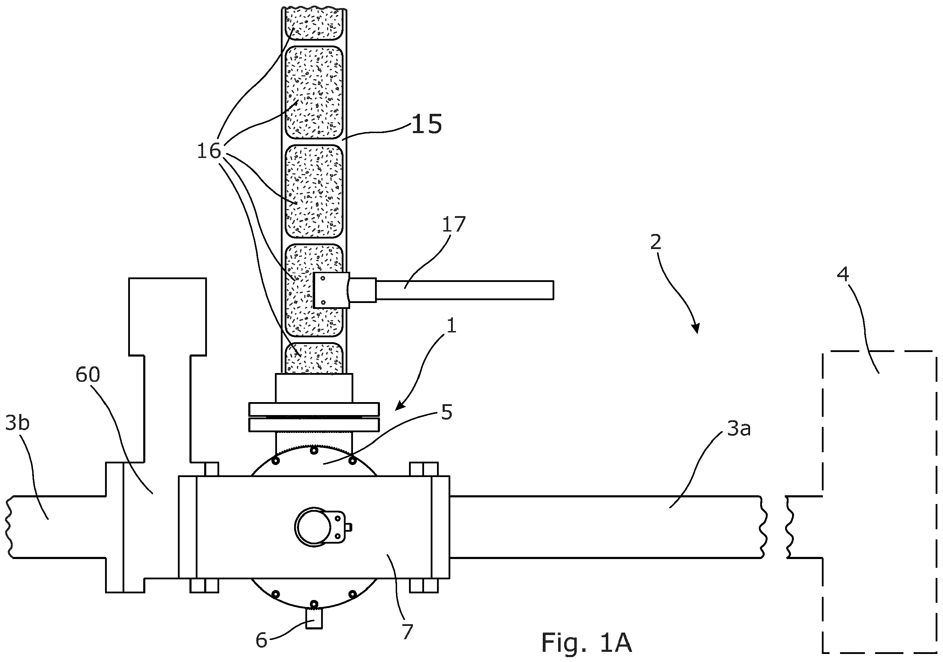

Fig. 1A shows an automatic cleaning pig launcher 1 inserted into a wastewater system 2, comprising wastewater pipes, respectively an inlet pipe 3a and an outlet pipe 3b, and a pumping station 4. The outlet pipe 3b is typically connected to a collection well or another collection point (not shown). The cleaning pig launcher has a valve housing 5, which comprises a drain valve 6 for emptying the feed valve/valve housing. An actuator 7 is arranged to rotate the feed valve 8 (not visible) in the valve housing 5. A magazine 15 is connected to the valve housing 5, and it is shown that the magazine contains a number of cleaning pigs 16. Mounted in the magazine 15 is shown a positioning unit 17, which may be seen as a blocking device - in this embodiment in the form of a cylinder with a tip which stops the cleaning pigs in the magazine from falling further than to a specific position. The positioning unit 17 ensures that the top cleaning pigs do not inadvertently press the bottom cleaning pig in the direction of the valve housing 5/feed valve 8 (not visible). The cleaning pig that is closest to the valve housing 5 may be free to travel into the valve housing 5 from the magazine via gravity, while the remaining cleaning pigs 16 are prevented from travelling in a downwards direction. Between the valve housing 5 and outlet pipe 3b is shown a closing valve 60 which can close off between the outlet pipe 3b and the valve housing 5. In this way, it is achieved that wastewater cannot flow back from the outlet pipe to the valve housing, more specifically the feed valve in the valve housing (not shown).

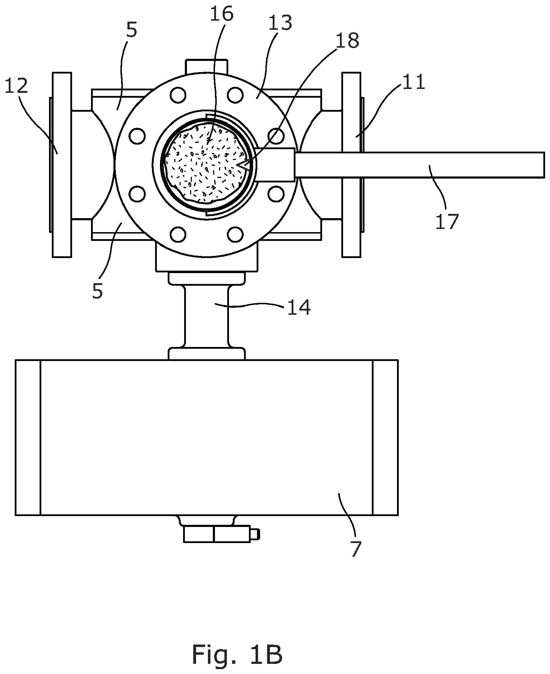

Fig. 1B shows the cleaning pig launcher 1 of Fig. 1A in top view, but without the pipes 3a, 3b. It can be seen here that the valve housing 5 comprises an inlet pipe 11, an outlet pipe 12 and a magazine pipe 13, all comprising flanges for connecting with pipes and magazine. In this depiction, it can be seen that the positioning unit 17 comprises a tip 18, which is fed into the magazine 15 to stop the cleaning pigs 16 from falling further down. It is possible for this tip 18 to both slow down the cleaning pigs by hitting into a cleaning pig and stop the cleaning pigs by standing on top of the tip. In this depiction, it can be seen that the actuator 7 is connected to the feed valve 8 (not visible) in the valve housing 5 via a shaft 14.

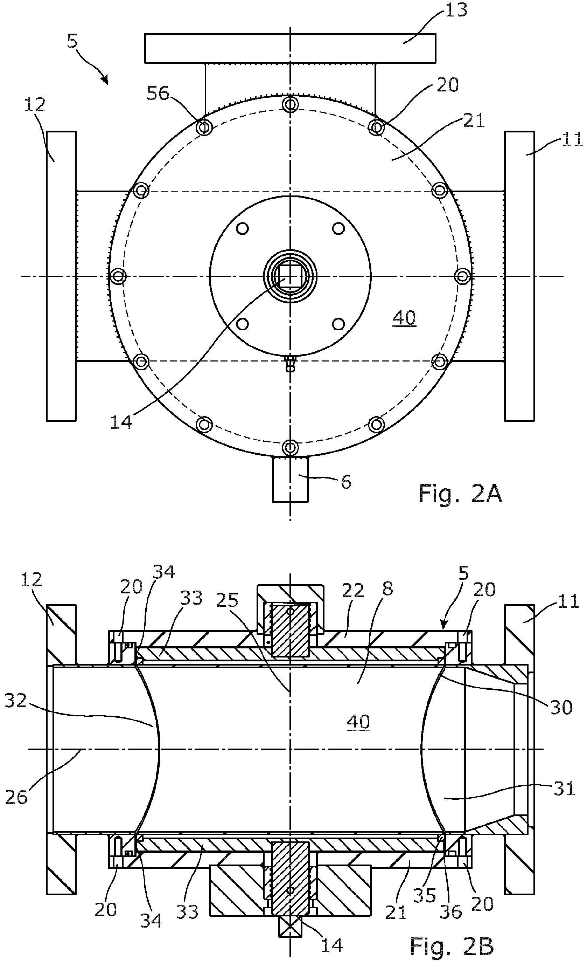

Fig. 2A shows the valve housing 5 with the inlet pipe 11, the outlet pipe 12 and the magazine pipe 13. It can also be seen that valve housing sides 21 (only one visible) are fitted using a number of bolts 20. In this way, both assembly and service are rendered as easy as possible. Centrally located in the valve housing side 21 can be seen the shaft 14 for the feed valve 8 (only the shaft is visible).

Fig. 2B shows, in section, the valve housing 5 of Fig. 2A with the feed valve 8. The figure shows the feed valve 8 in a first position, where it is open to allow wastewater to flow through unimpeded. Thus, the feed valve 8 can rotate about a valve axis 25, and the wastewater flows parallel to a flow axis 26. As mentioned in Fig. 2A, the side plates 21 of the valve housing can be disassembled and fitted using the bolts 20. It is shown that an outer periphery 30 of the feed valve 8 comprises a concave area, and that the valve housing 5 comprises a convex inlet insert 31 and a convex outlet insert 32. The feed valve further comprises a guide section 33 on each side, having a flat outer periphery surface 34. This flat periphery surface 34 makes it possible to secure a precise guide between the valve housing 5 and the feed valve 8. In another embodiment, a seal may be laid in the same section, e.g. an O-ring or another type of packing 35 could be placed in a keyway 36 (shown in the figure, but not necessary in all embodiments).

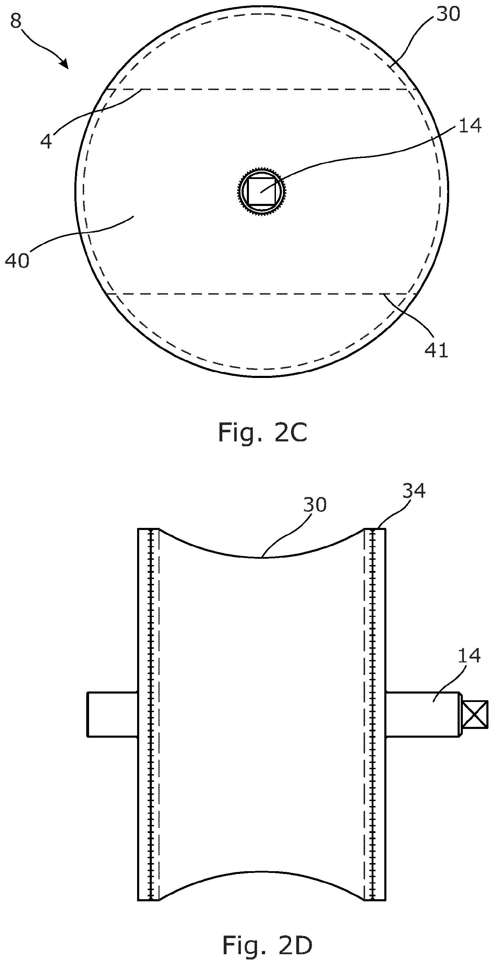

Fig. 2C shows the feed valve 8 alone. The central shaft 14 can be seen, and it is indicated by a dotted line that the outer periphery 30, at least in a partial area, arcs inwards towards the shaft 14 and is thus concave. A through opening 40 of the feed valve 8 is shown delimited by dotted lines 41.

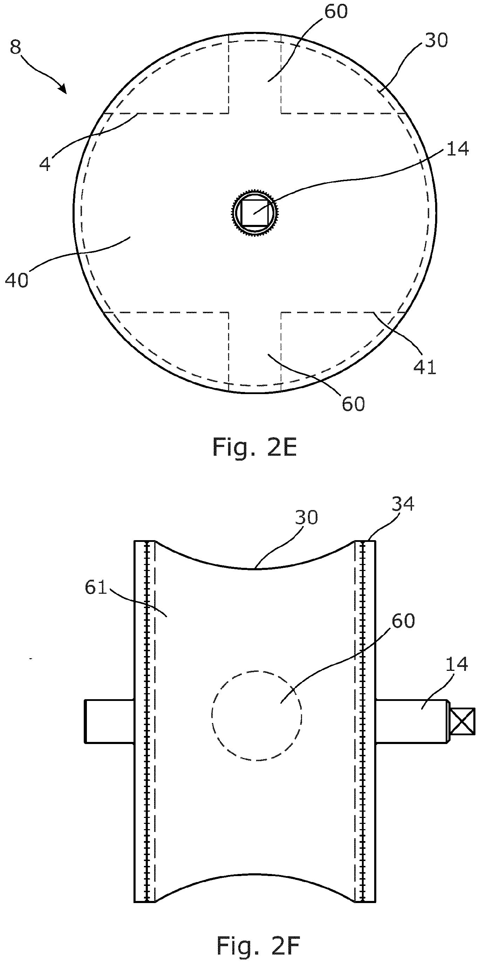

Figs. 2E and 2F show a similar feed valve as shown in Figs. 2C and 2D, where the valve may be provided with an opening 60, which provides fluid communication from a surface 61 of the valve 8 and into the inner volume 40 of the valve. These openings may be positioned at an angle, e.g. a right angle to the longitudinal axis 26 of the valve (valve axis), thereby providing fluid communication from the magazine 15 into the inner volume 40 via the upper opening, and providing fluid communication from the inner volume 40 towards the drain valve 6 when the feed valve is in its first position.

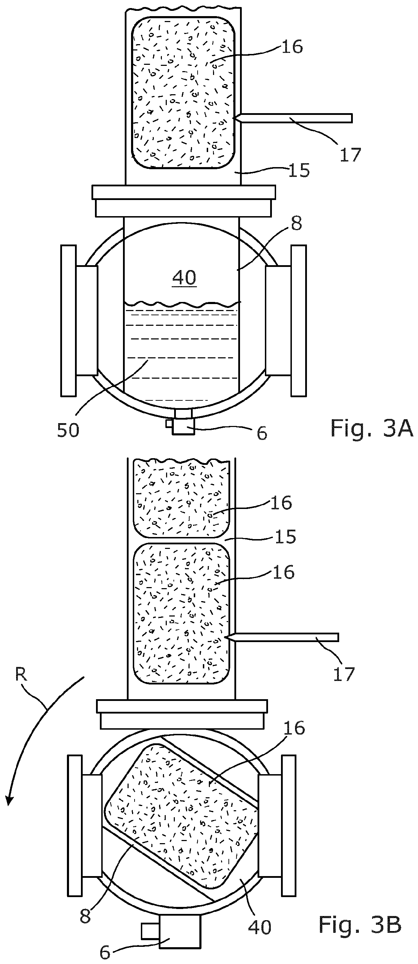

Figs. 3A-3D show in highly simplified figures how a feed valve 8 feeds a cleaning pig 16 into the wastewater system as shown in Fig. 1A. An additional valve 60 is shown in Fig. 1A to ensure that there is no backflow from the outlet side towards the feed valve, risking it filling it up.

Fig. 3A shows the feed valve in the receiving position, but with wastewater 50 still trapped in the feed valve 8. In the receiving position, the feed valve is rotated approx. 90° in relation to the flow-through position, in which the wastewater can run freely in the through opening 40 of the feed valve 8. The cleaning pig 16 is kept in waiting position in the magazine 15 by the positioning unit 17. If the cleaning pig 16 was released, thereby falling into the feed valve 8 without it being emptied, the cleaning pig 16 would not fully fit into the feed valve 8. This may introduce problems for the feed valve 8 to rotate freely. In another embodiment, the cleaning pig launcher may comprise a further positioning device whereby the positioning of the cleaning pigs in the magazine and feed valve, respectively, may be controlled via several parameters. In the situation depicted, the next step is thus for the drain valve 6 to be kept open and the wastewater 50 to be drained completely. During normal operations, the wastewater can often fill the entire magazine 15, whereby the cleaning pigs 16 may be filled with water. This puts a lot of pressure on a bottom cleaning pig 16a, and therefore the positioning unit 17, as a minimum, positions that cleaning pig immediately above/after the cleaning pig to be launched next. In this way, it is achieved that the bottom cleaning pig is not affected by the weight of the above-positioned cleaning pigs. Since the wastewater typically contains impurities, the wastewater in an embodiment can be pushed out using compressed air. This is done by adding compressed air over the water table of the wastewater 50. Once the wastewater 50 is drained out of the feed valve 8, the cleaning pig 16 can fall completely into place in the feed valve 8, and the feed valve 8 with the cleaning pig is ready for launch. The magazine 15 may comprise means to ensure that the cleaning pigs are fed into the feed valve. This could be either using small wheels on the side of the magazine, using a weight on the top cleaning pig or using compressed air.

Fig. 3B shows that a cleaning pig 16 is positioned in the feed valve 8. The feed valve 8 is rotated a quarter of a turn in the direction of the arrow R from the position of Fig. 3A, and the feed valve 8 is thus moving towards its flow-through position. The rotation is carried out by the actuator 7 via the shaft 14 of the feed valve. The drain valve 6 may still be open, but no longer needs to be open. The next cleaning pig 16 in the magazine 15 is now kept in position by the positioning unit 17.

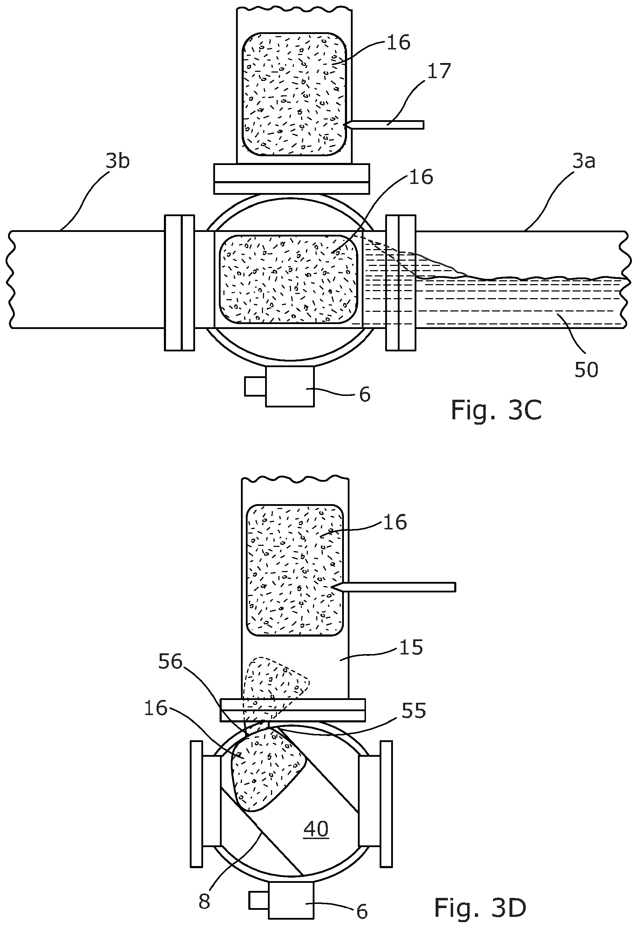

Fig. 3C shows that the feed valve 8 is fully rotated to its flow-through position, and the cleaning pig 16 can thus start to be pulled with the wastewater 50. The pumping station 4 (not shown) can thus once more start pumping wastewater through the pipelines and thus into the inlet pipe 3a and through the valve housing 5 and the feed valve 8. During feeding of the cleaning pig, the pump (not shown) is stopped, and when the feed valve is in its flow-through position, the pump is switched on again. When the wastewater 50 starts to flow again, the cleaning pig 16 positioned in the feed valve 8 is pulled along towards the outlet pipe 3b. Neither the additional cleaning pigs 16 in the magazine, nor the positioning unit 17 or the drain valve 6 have changed position from Fig. 3B to 3C.

Fig. 3D shows a situation in which a cleaning pig 16 has not been feed correctly into the through opening 40 of the feed valve 8. The cleaning pig has only been fed halfway into the feed valve 8, and the feed valve 8 thus cannot rotate freely. If the feed valve cannot rotate freely, this might, in a worst-case situation, mean that no flow can occur through the cleaning pig launcher, thereby causing it to act as a closed valve in the wastewater pipeline. To avoid this situation, an edge 55 of the through opening 40 interacts with an edge 56 of the magazine connection. These edges 55 and 56 interact so that a cleaning pig which is positioned incorrectly is cut in two rather than being jammed. In this way, it is ensured that the incorrectly positioned cleaning pig 16 does not block the rotation of the feed valve 8. A less efficient cleaning pig is thus launched, but there is no risk that it will create a problem elsewhere in the system. A mispositioning of a cleaning pig may be detected in several places. For example, it is noted/detected at the point where the cleaning pig is re-collected, i.e. after it has gone through the pipe that it was meant to clean, that it is only half a cleaning pig. Similarly, it can be noted/detected when replenishing the magazine that there are parts left in the magazine. Finally, a misposition can also be noted/detected by the fact that the pump is running at a higher load than normally as this indicates that cleaning of the pipeline in question has not taken place as expected. This means that the effect of the cleaning has not been as expected because the cleaning pig was smaller. The concave design of the periphery of the feed valve 8 (see e.g. Fig. 2D) thus interacts in such a way with a convex design of the edge of the magazine that a cutting effect between the two edges is achieved.

The drawings only serve as an explanation of the present invention and should in no way be considered as limiting the description of the present invention. It furthermore applies that shapes and sizes in the drawings of various parts are schematic and intended to provide a better understanding of the invention and should therefore not be used to specifically limit the shapes and sizes of various parts in the present application. Those skilled in this area will be able to select the possible shapes and sizes to implement the invention according to the present application.

## Claims

1. An automatic cleaning pig launcher (1) for wastewater pipelines (3a, 3b), comprising:
- a valve housing (5) comprising flanges for installation in a wastewater pipeline (3a, 3b), wherein the valve housing (5) comprises at least one wastewater inlet (11) and at least one wastewater outlet (12), and a feed opening (40) for cleaning pigs (16), and
- a rotatable feed valve (8) installed in the valve housing (5) for receiving and feeding cleaning pigs (16) into the pipeline (3a, 3b), wherein the cleaning pig launcher (1) further comprises:
- a cleaning pig magazine (15) installed on the valve housing (5), adapted to storing and positioning a number of cleaning pigs (16) so that the stored cleaning pigs (16) can be successively launched into the wastewater pipeline (3a, 3b) via the feed valve (8) without opening the magazine (15),
**characterized in that** the valve housing (5) comprises a drain valve (6) for draining wastewater in the valve housing (5) when the feed valve (8) is in a position for receiving a cleaning pig (16).

2. An automatic cleaning pig launcher (1) for wastewater pipelines (3a, 3b) according to claim 1, wherein the drain valve (6) is operated using pressurised air.

3. An automatic cleaning pig launcher (1) for wastewater pipelines (3a, 3b) according to any of claims 1-2, wherein the feed valve (8) has a fully or partially circular cross-section as seen in parallel with the pivotal axis of the feed valve (8).

4. An automatic cleaning pig launcher (1) for wastewater pipelines (3a, 3b) according to any of claims 1-3, wherein the outer periphery surface of the valve (8) is concave, and the inner wall of the valve housing (5) is convex.

5. An automatic cleaning pig launcher (1) for wastewater pipelines (3a, 3b) according to any of claims 1-4, wherein at least 25% of the launch opening on the feed valve (8) comprises an insert adapted to interact with a mouth opening (56) of the magazine (15).

6. An automatic cleaning pig launcher (1) for wastewater pipelines (3a, 3b) according to any of claims 1-5, wherein the cleaning pig launcher further comprises a positioning means (17) for positioning a cleaning pig (16) in the cleaning pig magazine (15).

7. An automatic cleaning pig launcher (1) for wastewater pipelines (3a, 3b) according to any of claims 1-6, wherein the magazine (15) comprises a hydrogen sulphide-tight cover.

8. An automatic cleaning pig launcher (1) for wastewater pipelines (3a, 3b) according to any of the preceding claims, wherein the wastewater pipeline (3a, 3b) is a pressurised wastewater pipeline.

9. An automatic cleaning pig launcher (1) for wastewater pipelines (3a, 3b) according to any of the preceding claims, wherein the rotatable feed valve (8) in a first position is configured to provide fluid communication between an inlet pipe (11) and an outlet pipe (12), and in a second position provides fluid communication with the magazine (15).

10. An automatic cleaning pig launcher (1) for wastewater pipelines (3a, 3b) according to any of the preceding claims, wherein the automatic cleaning pig launcher comprises a second valve positioned between the inlet pipe (11) and/or the outlet pipe (12) configured to prevent fluid communication from the inlet pipe (11) and/or the outlet pipe (12) into the rotatable feed valve (8).

11. An automatic cleaning pig launcher (1) for wastewater pipelines (3a, 3b) according to any of the preceding claims, wherein a longitudinal axis of the magazine (15) is positioned at an angle relative to a longitudinal axis of the pipeline.

12. An automatic cleaning pig launcher (1) for wastewater pipelines (3a, 3b) according to any of the preceding claims, wherein the magazine (15) comprises a blocking device for selectively loading cleaning pigs (16) into the rotatable feed valve (8).

13. A cleaning system for automatic launch of cleaning pigs (16) into wastewater pipelines (3a, 3b), comprising an automatic cleaning pig launcher (1) according to claims 1-12, wherein the system comprises a computer-based control system.

14. A cleaning system for automatic launch of cleaning pigs (16) into wastewater pipelines (3a, 3b) according to claim 13, wherein the computer-based control system of the system comprises an interface module for communication with an SRO system to control the overall operation of an entire wastewater system.

## Patentansprüche

1. Automatischer Reinigungsmolchstarter (1) für Abwasserrohrleitungen (3a, 3b), mit:
- einem Ventilgehäuse (5), das Flansche zur Installation in eine Abwasserrohrleitung (3a, 3b) aufweist, wobei das Ventilgehäuse (5) zumindest einen Abwassereinlass (11) und zumindest einen Abwasserauslass (12) sowie eine Zuführöffnung (40) für Reinigungsmolche (16) aufweist, und
- einem in dem Ventilgehäuse (5) installierten drehbaren Zuführventil (8) zum Aufnehmen und Zuführen von Reinigungsmolchen (16) in die Rohrleitung (3a, 3b), wobei der Reinigungsmolchstarter (1) weiterhin aufweist:
- ein Reinigungsmolchmagazin (5), das an dem Ventilgehäuse (5) installiert ist und das dazu ausgelegt ist, eine Anzahl von Reinigungsmolchen (16) zu speichern und zu positionieren, so dass die gespeicherten Reinigungsmolche (16) nacheinander in die Abwasserrohrleitung über das Zuführventil (8) ohne Öffnen des Magazins (5) gestartet werden können,
**dadurch gekennzeichnet, dass** das Ventilgehäuse (5) ein Ablassventil (6) zum Ablassen von Abwasser in dem Ventilgehäuse (5) aufweist, wenn das Zuführventil (8) in einer Position zum Aufnehmen eines Reinigungsmolches (16) ist.

2. Automatischer Reinigungsmolchstarter (1) für Abwasserrohrleitungen (3a, 3b) nach Anspruch 1, wobei das Ablassventil (6) unter Verwendung von Druckluft betrieben wird.

3. Automatischer Reinigungsmolchstarter (1) für Abwasserrohrleitungen (3a, 3b) nach irgendeinem der Ansprüche 1-2, wobei das Zuführventil (8) parallel zur Schwenkachse des Zuführventils (8) gesehen einen vollständig oder teilweise kreisförmigen Querschnitt aufweist.

4. Automatischer Reinigungsmolchstarter (1) für Abwasserrohrleitungen (3a, 3b) nach irgendeinem der Ansprüche 1-3, wobei die äußere Umfangsfläche des Ventils (8) konkav ist, und wobei die Innenwand des Ventilgehäuses (5) konvex ist.

5. Automatischer Reinigungsmolchstarter (1) für Abwasserrohrleitungen (3a, 3b) nach irgendeinem der Ansprüche 1-4, wobei zumindest 25 % der Startöffnung an dem Zuführventil (8) einen Einsatz aufweisen, der dazu ausgelegt ist, mit einer Mündungsöffnung (56) des Magazins (15) zusammen zu wirken.

6. Automatischer Reinigungsmolchstarter (1) für Abwasserrohrleitungen (3a, 3b) nach irgendeinem der Ansprüche 1-5, wobei der Reinigungsmolchstarter weiterhin Positioniermittel (17) zum Positionieren eines Reinigungsmolches (16) in dem Reinigungsmolchmagazin (5) aufweist.

7. Automatischer Reinigungsmolchstarter (1) für Abwasserrohrleitungen (3a, 3b) nach irgendeinem der Ansprüche 1-6, wobei das Magazin (15) einen schwefelwasserstoffdichten Deckel aufweist.

8. Automatischer Reinigungsmolchstarter (1) für Abwasserrohrleitungen (3a, 3b) nach irgendeinem der vorhergehenden Ansprüche, wobei die Abwasserrohrleitung (3a, 3b) eine unter Druck stehende Abwasserrohrleitung ist.

9. Automatischer Reinigungsmolchstarter (1) für Abwasserrohrleitungen (3a, 3b) nach irgendeinem der vorhergehenden Ansprüche, wobei das drehbare Zuführventil (8) in einer ersten Position dazu ausgestaltet ist, eine Fluidverbindung zwischen einem Einlassrohr (11) und einem Auslassrohr (12) bereitzustellen, und in einer zweiten Position eine Fluidverbindung mit dem Magazin (15) bereitstellt.

10. Automatischer Reinigungsmolchstarter (1) für Abwasserrohrleitungen (3a, 3b) nach irgendeinem der vorhergehenden Ansprüche, wobei der automatische Reinigungsmolchstarter ein zwischen dem Einlassrohr (11) und/oder dem Auslassrohr (12) angeordnetes zweites Ventil aufweist, das dazu ausgestaltet ist, eine Fluidverbindung von dem Einlassrohr (11) und/oder dem Auslassrohr (12) in das drehbare Zuführventil (8) zu verhindern.

11. Automatischer Reinigungsmolchstarter (1) für Abwasserrohrleitungen (3a, 3b) nach irgendeinem der vorhergehenden Ansprüche, wobei eine Längsachse des Magazins (5) unter einem Winkel relativ zu einer Längsachse der Rohrleitung angeordnet ist.

12. Automatischer Reinigungsmolchstarter (1) für Abwasserrohrleitungen (3a, 3b) nach irgendeinem der vorhergehenden Ansprüche, wobei das Magazin (15) eine Blockiervorrichtung zum selektiven Laden von Reinigungsmolchen (16) in das drehbare Zuführventil (8) aufweist.

13. Reinigungssystem zum automatischen Starten von Reinigungsmolchen (16) in Abwasserrohrleitungen (3a, 3b), mit einem automatischen Reinigungsmolchstarter (1) nach den Ansprüchen 1-12, wobei das System ein Computer-basiertes Steuerungssystem aufweist.

14. Reinigungssystem zum automatischen Starten von Reinigungsmolchen (16) in Abwasserrohrleitungen (3a, 3b) nach Anspruch 13, wobei das Computer-basierte Steuerungssystem des Systems ein Schnittstellenmodul zur Kommunikation mit einem SRO-System aufweist, um den Gesamtbetrieb eines gesamten Abwassersystems zu steuern.

## Revendications

1. Lanceur de racleur de nettoyage automatique (1) pour conduites d'eaux usées (3a, 3b), comprenant :
- un boîtier de vanne (5) comprenant des brides pour installation dans une conduite d'eaux usées (3a, 3b), dans lequel le boîtier de vanne (5) comprend au moins une entrée d'eaux usées (11) et au moins une sortie d'eaux usées (12), et une ouverture d'alimentation (40) pour des racleurs de nettoyage (16), et
- une vanne d'alimentation rotative (8) installée dans le boîtier de vanne (5) pour recevoir et alimenter les racleurs de nettoyage (16) dans la conduite (3a, 3b), dans lequel le lanceur de racleur de nettoyage (1) comprend en outre :
- un magasin de racleurs de nettoyage (15) installé sur le boîtier de vanne (5), adapté pour stocker et positionner un certain nombre de racleurs de nettoyage (16) de sorte que les racleurs de nettoyage stockés (16) puissent être lancés successivement dans la conduite d'eau usée (3a, 3b) via la vanne d'alimentation (8) sans ouvrir le magasin (15),
**caractérisé en ce que** le boîtier de vanne (5) comprend une vanne de drainage (6) pour drainer les eaux usées dans le boîtier de vanne (5) lorsque la vanne d'alimentation (8) est dans une position pour recevoir un racleur de nettoyage (16).

2. Lanceur de racleur de nettoyage automatique (1) pour conduites d'eaux usées (3a, 3b) selon la revendication 1, dans lequel la vanne de drainage (6) est actionnée en utilisant de l'air sous pression.

3. Lanceur de racleur de nettoyage automatique (1) pour conduites d'eaux usées (3a, 3b) selon l'une quelconque des revendications 1-2, dans lequel la vanne d'alimentation (8) présente une section transversale entièrement ou partiellement circulaire vue parallèlement à l'axe de pivotement de la vanne d'alimentation (8).

4. Lanceur de racleur de nettoyage automatique (1) pour conduites d'eaux usées (3a, 3b) selon l'une quelconque des revendications 1-3, dans lequel la surface périphérique externe de la vanne (8) est concave, et la paroi interne du boîtier de vanne (5) est convexe.

5. Lanceur de racleur de nettoyage automatique (1) pour conduites d'eaux usées (3a, 3b) selon l'une quelconque des revendications 1-4, dans lequel au moins 25 % de l'ouverture de lancement sur la vanne d'alimentation (8) comprend un insert adapté pour interagir avec une ouverture d'embouchure (56) du magasin (15).

6. Lanceur de racleur de nettoyage automatique (1) pour conduites d'eaux usées (3a, 3b) selon l'une quelconque des revendications 1-5, dans lequel le lanceur de racleur de nettoyage comprend en outre des moyens de positionnement (17) pour positionner un racleur de nettoyage (16) dans le magasin de racleurs de nettoyage (15).

7. Lanceur de racleur de nettoyage automatique (1) pour conduites d'eaux usées (3a, 3b) selon l'une quelconque des revendications 1-6, dans lequel le magasin (15) comprend un couvercle étanche au sulfure d'hydrogène.

8. Lanceur de racleur de nettoyage automatique (1) pour conduites d'eaux usées (3a, 3b) selon l'une quelconque des revendications précédentes, dans lequel la conduite d'eaux usées (3a, 3b) est une conduite d'eaux usées mise sous pression.

9. Lanceur de racleur de nettoyage automatique (1) pour conduites d'eaux usées (3a, 3b) selon l'une quelconque des revendications précédentes, dans lequel la vanne d'alimentation rotative (8), dans une première position, est configurée pour fournir une communication fluidique entre un tuyau d'entrée (11) et un tuyau de sortie (12), et dans une seconde position assure une communication fluidique avec le magasin (15).

10. Lanceur de racleur de nettoyage automatique (1) pour conduites d'eaux usées (3a, 3b) selon l'une quelconque des revendications précédentes, dans lequel le lanceur de racleur de nettoyage automatique comprend une seconde vanne positionnée entre le tuyau d'entrée (11) et/ou le tuyau de sortie (12), configurée pour empêcher une communication fluidique depuis le tuyau d'entrée (11) et/ou le tuyau de sortie (12) dans la vanne d'alimentation rotative (8).

11. Lanceur de racleur de nettoyage automatique (1) pour conduites d'eaux usées (3a, 3b) selon l'une quelconque des revendications précédentes, dans lequel un axe longitudinal du magasin (15) est positionné selon un angle par rapport à un axe longitudinal de la conduite.

12. Lanceur de racleur de nettoyage automatique (1) pour conduites d'eaux usées (3a, 3b) selon l'une quelconque des revendications précédentes, dans lequel le magasin (15) comprend un dispositif de blocage pour charger sélectivement les racleurs de nettoyage (16) dans la vanne d'alimentation rotative (8).

13. Système de nettoyage pour un lancement automatique de racleurs de nettoyage (16) dans des conduites d'eaux usées (3a, 3b), comprenant un lanceur de racleur de nettoyage automatique (1) selon les revendications 1 à 12, dans lequel le système comprend un système de commande informatisé.

14. Système de nettoyage pour un lancement automatique de racleurs de nettoyage (16) dans des conduites d'eaux usées (3a, 3b) selon la revendication 13, dans lequel le système de commande informatisé du système comprend un module d'interface pour communiquer avec un système SRO afin de commander le fonctionnement global d'un système d'assainissement complet.
